# EUROPEAN PATENT APPLICATION

(11) **EP 4 700 663 A1**
(43) Date of publication of application: **25.02.2026**
(21) Application number: 24792342.8
(22) Date of filing: 14.02.2024
(51) Int. Cl.: G06N 20/00, G06N 3/0475, G06V 10/774

(54) **DATA AUGMENTATION PROGRAM, DATA AUGMENTATION METHOD, AND INFORMATION PROCESSING DEVICE**

(30) Priority: 18.04.2023 JP 2023067967
(71) Applicant: FUJITSU LIMITED, Kawasaki-shi, Kanagawa 211-8588 (JP)
(72) Inventor: YOSHII, Akihito, Kawasaki-shi, Kanagawa 211-8588 (JP)
(74) Representative: Hoffmann Eitle
(86) International application number: PCT/JP2024/004925
(87) International publication number: WO 2024/219066

(57) **Abstract**

An information processing apparatus acquires an image by inputting, into a first generation model, first text including attribute values of a plurality of attributes included in first data among a plurality of pieces of data. The information processing apparatus acquires second text by inputting the image to a second generation model. The information processing apparatus selects an attribute value of other attribute different from the plurality of attributes from the second text. The information processing apparatus augments a plurality of pieces of data by adding the attribute value of the other attribute to the first data. To augment a data set for training a machine learning model for estimating a protected attribute.

## Description

### Field

The present invention relates to a data augmentation program, a data augmentation method, and an information processing apparatus that augment a data set for training a machine learning model.

### Background

There may be an inherent lack of data sets for training a machine learning model, or some constraints may render some data set unavailable. For example, among attributes that affect the output results of a machine learning model, attributes that need careful handling are useful to correct the output results, but, in some cases, direct use is not possible due to legal and ethical risks. In the following description, an attribute that needs careful handling is referred to as a "protected attribute".

In the related art, in order not to directly use the protected attribute, a machine learning model for estimating the protected attribute from attributes other than the protected attribute of a published data set is trained, and the protected attribute is indirectly estimated by using the trained machine learning model.

### Citation List

### Non Patent Literature

Non Patent Document 1: Radford, A. et al., Learning Transferable Visual Models From Natural Language Supervision, in proceedings of ICML (2021)
Non Patent Document 2: Awasthi, P. et al., Evaluating Fairness of Machine Learning Models Under Uncertain and Incomplete Information, in proceedings of FAccT (2021)
Non Patent Document 3: Brown, D. P. et al., Using Bayesian Imputation to Assess Racial and Ethnic Disparities in Pediatric Performance Measures, Health Services Research (2015)

### Summary

### Technical Problem

However, since there are various attributes of actual operation data actually obtained, in some cases, it is not possible to estimate the protected attribute by using the trained machine learning model as in the prior art. For example, in a case where the machine learning model estimates the protected attribute based on an attribute A and an attribute B, it is not possible to estimate the protected attribute unless the attribute A and the attribute B are included in the actual operation data.

In addition, in the related art, the machine learning model for estimating the protected attribute is trained within a range of the attributes included in the data set, and thus, in a case where the number of original attributes is small, it may perform over-training to specific attributes and it is not possible to perform generalization.

Therefore, it is preferable to augment the data set for training the machine learning model for estimating the protected attribute.

In one aspect, an object is to provide a data augmentation program, a data augmentation method, and an information processing apparatus capable of augmenting a data set for training a machine learning model for estimating a protected attribute.

### Solution to Problem

According to an aspect, a data augmentation program causes a computer to execute a process. The process includes acquiring an image by inputting, into a first generation model, first text including attribute values of a plurality of attributes included in first data among a plurality of pieces of data. The process includes acquiring second text by inputting the image into a second generation model. The process includes selecting an attribute value of other attribute different from the plurality of attributes from the second text. The process includes augmenting the plurality of pieces of data by adding the attribute value of the other attribute to the first data.

### Advantageous Effects of Invention

It is possible to augment a data set for training a machine learning model for estimating a protected attribute.

### Brief Description of Drawings

FIG. 1 is a diagram (1) for describing data augmentation processing in a case where actual operation data is unknown.
FIG. 2 is a diagram (2) for describing the data augmentation processing in a case where the actual operation data is unknown.
FIG. 3 is a diagram (1) for describing data augmentation processing in a case where actual operation data is known.
FIG. 4 is a diagram (2) for describing the data augmentation processing in a case where the actual operation data is known.
FIG. 5 is a functional block diagram illustrating a configuration of an information processing apparatus according to the present example.
FIG. 6 is a diagram illustrating an example of a data structure of an appearance rate table.
FIG. 7 is a flowchart illustrating a processing procedure of an extraction unit according to the present example.
FIG. 8 is a diagram for describing processing of an augmentation unit according to the present example.
FIG. 9 is a flowchart (1) illustrating a processing procedure of an augmentation unit according to the present example.
FIG. 10 is a flowchart (2) illustrating the processing procedure of the augmentation unit according to the present example.
FIG. 11 is a flowchart illustrating a processing procedure of a matching unit according to the present example.
FIG. 12 is a flowchart illustrating another processing procedure of the matching unit according to the present example.
FIG. 13 is a flowchart illustrating a processing procedure of the information processing apparatus according to the present example.
FIG. 14 is a diagram for describing other processing of the augmentation unit according to the present example.
FIG. 15 is a flowchart illustrating other processing procedure of the augmentation unit according to the present example.
FIG. 16 is a diagram illustrating an example of a hardware configuration of a computer that implements functions similar to those of the information processing apparatus in the examples.

### Embodiments for Carrying Out the Invention

Hereinafter, examples of a data augmentation program, a data augmentation method, and an information processing apparatus disclosed in the present application will be described in detail with reference to the drawings. Note that the invention is not limited by the examples. Examples

An example of data augmentation processing executed by an information processing apparatus according to the present example will be described. In the following description, the information processing apparatus according to the present example will be referred to as an "information processing apparatus 100". In addition, a data set published on a network or the like is referred to as "initial table data". A data set used at the time of actual operation is referred to as "actual operation data". A plurality of attributes and attribute values of the respective attributes are set in the initial table data and the actual operation data.

First, regarding the data augmentation processing executed by the information processing apparatus 100, the data augmentation processing in a case where the actual operation data is unknown will be described, and then the data augmentation processing in a case where the actual operation data is known will be described.

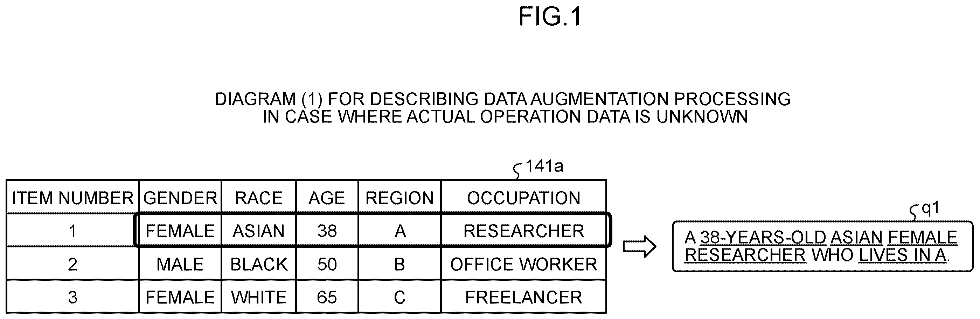

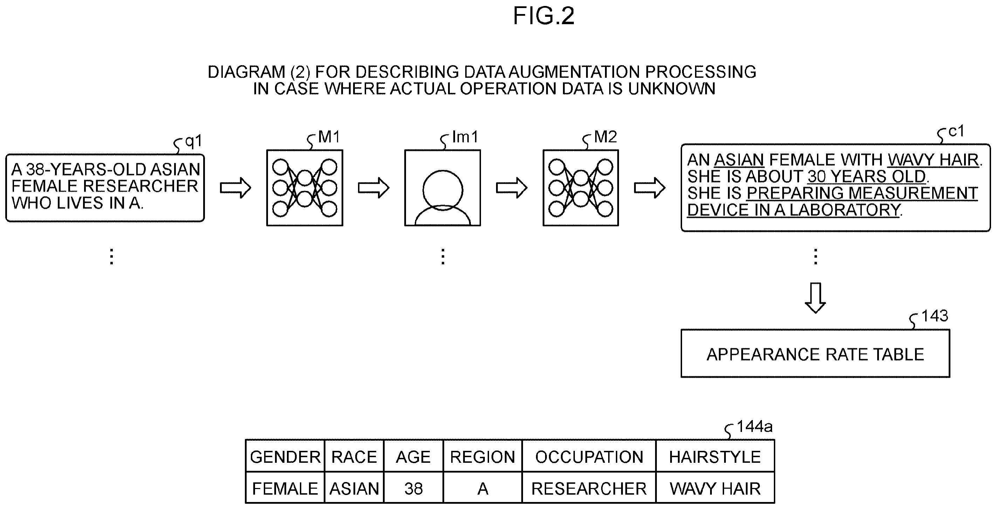

FIGS. 1 and 2 are diagrams for describing data augmentation processing in a case where actual operation data is unknown. Description will be made with reference to FIG. 1. The information processing apparatus 100 uses an initial table data 141a as a published data set. The initial table data 141a includes item number, gender, race, age, region, and occupation. The item number is a number for identifying each record of the initial table data 141a. The gender, the race, the age, the region, and the occupation are attributes. In the description of FIGS. 1 and 2, the attribute of the gender is set as a protected attribute.

Corresponding to the record of the item number "1" of the initial table data 141a, the attribute value of the gender is "Female", the attribute value of the race is "Asian", the attribute value of the age is "38", the attribute value of the region is "A", and the attribute value of the occupation is "Researcher".

Corresponding to the record of the item number "2" of the initial table data 141a, the attribute value of the gender is "Male", the attribute value of the race is "Black", the attribute value of the age is "50", the attribute value of the region is "B", and the attribute value of the occupation is "Office Worker". Corresponding to the record of the item number "3", the attribute value of the gender is "Female", the attribute value of the race is "White", the attribute value of the age is "65", the attribute value of the region is "C", and the attribute value of the occupation is "Freelancer".

The information processing apparatus 100 generates text that partially expresses a target from the attribute values of the attributes of the initial table data 141a. In the following description, text that is generated from the attribute value of the attribute and partially expresses the target is referred to as a "query". For example, the information processing apparatus generates a query q1 based on the attribute value of each attribute included in the record of the item number "1". As illustrated in FIG. 1, the query q1 includes "A 38-years-old Asian female researcher who lives in A."

Description will be made with reference to FIG. 2. The information processing apparatus 100 uses generation models M1 and M2. The generation model M1 is a model in which text is input and an image is output. The generation model M2 is a model in which an image is input and text is output. The generation models M1 and M1 are NNs (Neural Networks) or the like. The generation models M1 and M2 are used as trained models.

The information processing apparatus 100 generates an image Im1 by inputting the query q1 to the generation model M1. For example, the image Im1 is a face image of a person indicated by the query q1.

The information processing apparatus 100 generates a caption c1 by inputting the image Im1 to the generation model M2. The caption c1 is text expressing the image Im1. For example, the caption c1 includes "An Asian female with wavy hair. She is about 30 years old. She is preparing measurement device in a laboratory."

The information processing apparatus 100 analyzes the caption c1 to specify a relationship between the attribute and the attribute value. The information processing apparatus 100 specifies the relationship between the attribute and the attribute value by repeatedly executing the above processing also for records after the item number "1" illustrated in FIG. 1. The information processing apparatus 100 sets an appearance rate of each attribute specified from each caption in an appearance rate table 143.

The information processing apparatus 100 specifies an attribute included in the initial table data 141a among attributes specified from each caption. The information processing apparatus 100 registers a relationship between the specified attribute and an attribute value of this attribute in an augmentation table data 144a.

In addition, the information processing apparatus 100 specifies an attribute that is not included in the initial table data 141a and has an appearance rate being equal to or higher than a threshold value among the attributes specified from each caption based on the appearance rate table 143. The information processing apparatus 100 registers a relationship between the specified attribute and an attribute value of this attribute in an augmentation table data 144a.

When the information processing apparatus 100 executes the processing described with reference to FIGS. 1 and 2, the attribute value of each attribute is set in the augmentation table data 144a. In the example illustrated in FIG. 2, gender, race, age, region, occupation, and hairstyle are registered as attributes in the augmentation table data 144a. For example, the attribute value of the gender is "Female", the attribute value of the race is "Asian", the attribute value of the age is "38", the attribute value of the region is "A", the attribute value of the occupation is "Researcher", and the attribute value of the hairstyle is "Wavy hair". The attribute of the augmentation table data 144a is data obtained by adding the attribute of the hairstyle to the attributes of the initial table data 141a.

The augmentation table data 144a is used as a training data set in a case of training a machine learning model for estimating a protected attribute. For example, when the protected attribute is "gender", input data in the case of training the machine learning model is the attribute values of "race", "age", "region", "occupation", and "hairstyle", and a correct answer label is the attribute value of "gender".

As compared with the attributes of the initial table data 141a in FIG. 1, the augmentation table data 144a includes the hairstyle that is not included in the attributes of the initial table data 141a. That is, according to the information processing apparatus 100, it is possible to augment the data set for training the machine learning model for estimating the protected attribute.

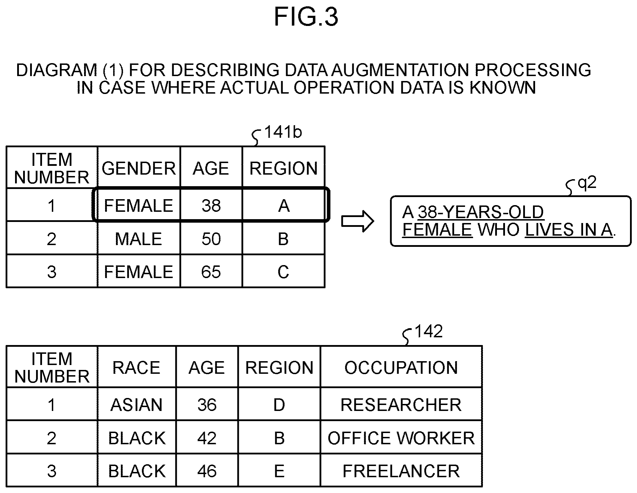

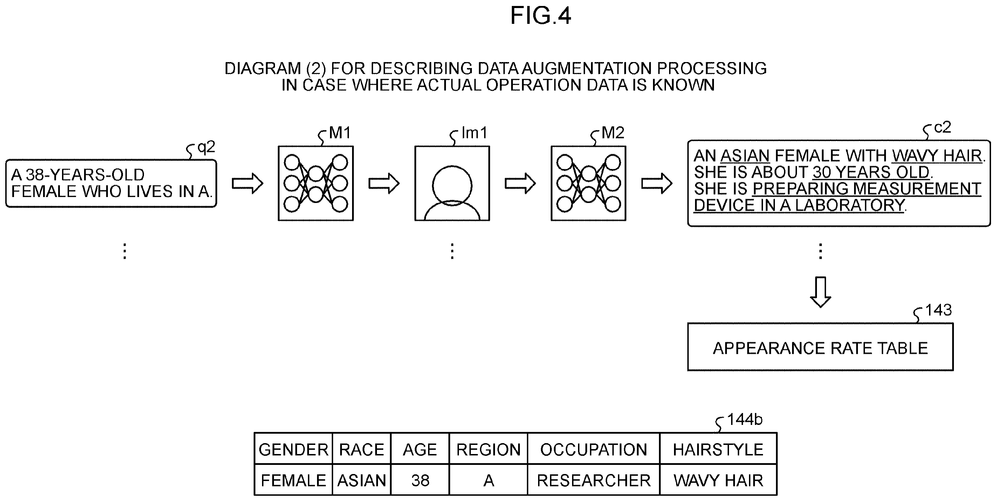

Subsequently, data augmentation processing in a case where the actual operation data is known will be described. FIGS. 3 and 4 are diagrams for describing data augmentation processing in a case where the actual operation data is known.

Description will be made with reference to FIG. 3. The information processing apparatus 100 uses an initial table data 141b as a published data set. The initial table data 141b includes item number, gender, age, and region. The item number is a number for identifying each record of the initial table data 141b. The gender, the race, the age, and the region are attributes. In the description of FIGS. 3 and 4, the attribute of the gender is set as a protected attribute.

In the example illustrated in FIG. 3, regarding the initial table data 141b, corresponding to the record of the item number "1", the attribute value of the gender is "Female", the attribute value of the age is "38", and the attribute value of the region is "A". Corresponding to the record of the item number "2", the attribute value of the gender is "Male", the attribute value of the age is "50", and the attribute value of the region is "B". Corresponding to the record of the item number "3", the attribute value of the gender is "Female", the attribute value of the age is "65", and the attribute value of the region is "C".

The information processing apparatus 100 uses actual operation data 142 as a data set that is an actual operation target. The actual operation data 142 includes item number, race, age, region, and occupation. The item number is a number for identifying each record of the actual operation data 142. The race, the age, the region, and the occupation are attributes. Note that it is assumed that the attributes of the actual operation data 142 do not include the protected attribute "gender".

In the example illustrated in FIG. 3, regarding the actual operation data 142, corresponding to the record of the item number "1", the attribute value of the race is "Asian", the attribute value of the age is "36", the attribute value of the region is "D", and the attribute value of the occupation is "Researcher".

Corresponding to the record of the item number "2", the attribute value of the race is "Black", the attribute value of the age is "42", the attribute value of the region is "B", and the attribute value of the occupation is "Office Worker". Corresponding to the record of the item number "3", the attribute value of the race is "Black", the attribute value of the age is "46", the attribute value of the region is "E", and the attribute value of the occupation is "Freelancer".

The information processing apparatus 100 generates a query q2 that partially expresses a target from the attribute values of the attributes of the initial table data 141b. The query q2 includes "A 38-years-old Asian female researcher who lives in A."

Description will be made with reference to FIG. 4. The information processing apparatus 100 uses generation models M1 and M2. The description of the generation models M1 and M2 is similar to the description of FIG. 2.

The information processing apparatus 100 generates an image Im2 by inputting the query q2 to the generation model M1. For example, the image Im2 is a face image of a person indicated by the query q2.

The information processing apparatus 100 generates a caption c2 by inputting the image Im2 to the generation model M2. The caption c2 is text expressing the image Im2. For example, the caption c2 includes "An Asian female with wavy hair. She is about 30 years old. She is preparing measurement device in a laboratory."

The information processing apparatus 100 analyzes the caption c2 to specify a relationship between the attribute and the attribute value. The information processing apparatus 100 specifies the relationship between the attribute and the attribute value by repeatedly executing the above processing also for records after the item number "1" of the initial table data 141b illustrated in FIG. 3. The information processing apparatus 100 sets an appearance rate of each attribute specified from each caption in the appearance rate table 143.

The information processing apparatus 100 specifies an attribute included in the initial table data 141a and the actual operation data 142 among attributes specified from each caption. The information processing apparatus 100 registers a relationship between the specified attribute and an attribute value of this attribute in an augmentation table data 144b.

In addition, the information processing apparatus 100 specifies an attribute that is not included in the initial table data 141a or the actual operation data 142 and has an appearance rate being equal to or higher than a threshold value among the attributes specified from each caption based on the appearance rate table 143. The information processing apparatus 100 registers a relationship between the specified attribute and an attribute value of this attribute in the augmentation table data 144b.

When the information processing apparatus 100 executes the processing described with reference to FIGS. 3 and 4, the attribute value of each attribute is set in the augmentation table data 144b. In the example illustrated in FIG. 4, gender, race, age, region, occupation, and hairstyle are registered as attributes in the augmentation table data 144b. For example, the attribute value of the gender is "Female", the attribute value of the race is "Asian", the attribute value of the age is "38", the attribute value of the region is "A", the attribute value of the occupation is "Researcher", and the attribute value of the hairstyle is "Wavy hair".

The augmentation table data 144b is used as training data set in a case of training a machine learning model for estimating the protected attribute. For example, when the protected attribute is "gender", input data in the case of training the machine learning model is the attribute values of "race", "age", "region", "occupation", and "hairstyle", and a correct answer label is the attribute value of "gender".

As compared with the attributes of the actual operation data 142 in FIG. 3, the augmentation table data 144b includes the gender, the age, the region, and the hairstyle that are not included in the attributes of the actual operation data 142. That is, according to the information processing apparatus 100, it is possible to augment the data set for training the machine learning model for estimating the protected attribute. In addition, since the number of types of attributes increases, it is possible to suppress over-training for a specific attribute in a case of training the machine learning model. Furthermore, by using the available known data, it is possible to remedy fairness without needing a protected attribute for unknown input data.

Note that, in the description of FIGS. 2 and 4, the case where the appearance rate of the attribute specified from each caption is set in the appearance rate table 143 has been described. However, the information processing apparatus 100 may register the number of appearances instead of the appearance rate and perform processing. In this case, the information processing apparatus 100 specifies an attribute that is not included in the initial table data 141a or the actual operation data 142 and has the number of appearances being equal to or higher than a threshold value among the attributes specified from each caption based on the appearance rate table 143. The information processing apparatus 100 registers a relationship between the specified attribute and the attribute value of this attribute in the augmentation table data 144b.

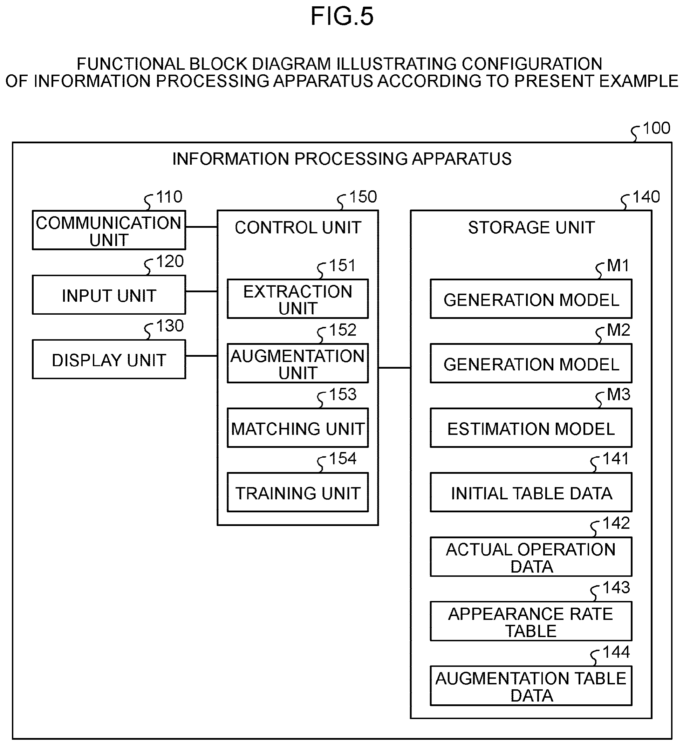

Next, a configuration example of the information processing apparatus 100 that executes the above-described data augmentation processing will be described. FIG. 5 is a functional block diagram illustrating the configuration of the information processing apparatus according to the present example. As illustrated in FIG. 5, a communication unit 110, an input unit 120, a display unit 130, a storage unit 140, and a control unit 150 are provided.

The communication unit 110 executes data communication with an external device or the like via a network. For example, the information processing apparatus 100 may acquire the generation models M1 and M2, the initial table data 141, and the actual operation data 142 via the communication unit 110.

The input unit 120 inputs various types of information to the control unit 150 in the information processing apparatus 100. A user may operate the input unit 120 to input the actual operation data 142 and the like.

The display unit 130 displays information output from the control unit 150.

The storage unit 140 includes the generation models M1 and M2, an estimation model M3, an initial table data 141, the actual operation data 142, the appearance rate table 143, and augmentation table data 144.

The generation model M1 is a model in which text such as a query is input and an image is output. The generation model M1 is an NN or the like.

The generation model M2 is a model in which an image is input and text is output. The generation model M2 is an NN or the like. The text output by the generation model M2 is the caption described with reference to FIGS. 2 and 4.

The estimation model M3 is a model in which an attribute value of an attribute other than the protected attribute is input and an attribute value of the protected attribute is output. The estimation model M3 is an NN or the like.

The initial table data 141 is a data set published on a network, and a plurality of attributes and attribute values corresponding to the attributes are registered. For example, the initial table data 141 corresponds to the initial table data 141a illustrated in FIG. 1 and the initial table data 141b illustrated in FIG. 3.

The actual operation data 142 is a data set used at the time of operation, and a plurality of attributes and attribute values corresponding to the attributes are registered. For example, the actual operation data set corresponds to the actual operation data 142 illustrated in FIG. 3.

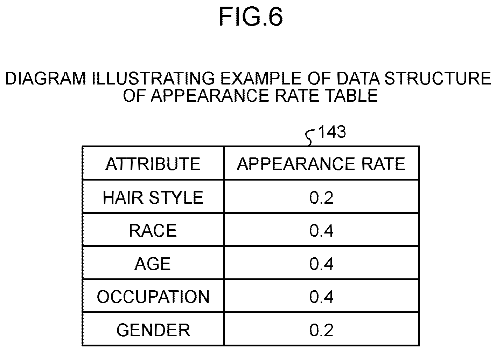

The appearance rate table 143 is a table that retains information regarding the appearance rate of an attribute extracted from a plurality of captions. FIG. 6 is a diagram illustrating an example of a data structure of the appearance rate table. As illustrated in FIG. 6, the appearance rate table 143 associates the attribute with the appearance rate.

In the augmentation table data 144, a relationship between an attribute specified by execution of the data augmentation processing by the information processing apparatus 100, and an attribute value is registered. For example, the augmentation table data 144 corresponds to the augmentation table data 144a illustrated in FIG. 2 and the augmentation table data 144b illustrated in FIG. 4.

The control unit 150 includes an extraction unit 151, an augmentation unit 152, a matching unit 153, and a training unit 154.

The extraction unit 151 generates a query including the attribute value based on the attribute value of each attribute included in the initial table data 141. The extraction unit 151 generates a face image by inputting the generated query to the generation model M1.

The extraction unit 151 may execute face detection on the face image and change the type of the attribute used in a case of generating the query, in a case where the face detection accuracy deteriorates. For example, the extraction unit 151 may input a face image to a trained face detection model, calculate a face likelihood score, and determine that the face detection accuracy has deteriorated in a case where the calculated score is equal to or less than a predetermined score.

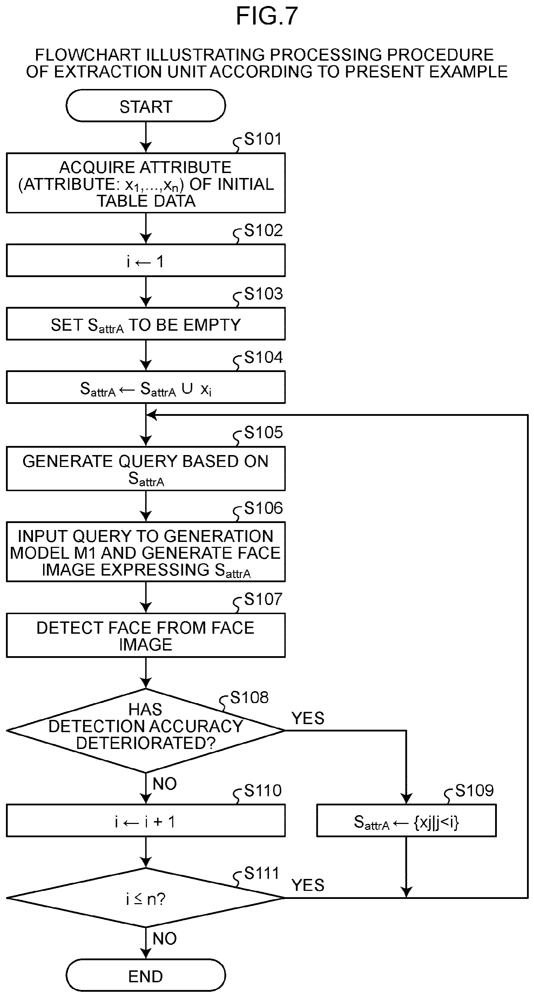

Here, an example of a processing procedure of the extraction unit 151 will be described. FIG. 7 is a flowchart illustrating the processing procedure of the extraction unit according to the present example. As illustrated in FIG. 7, the extraction unit 151 of the information processing apparatus 100 acquires an attribute (attribute: x₁,..., xₙ) of the initial table data 141 (Step S101). The extraction unit 151 sets 1 to i (Step S102). The extraction unit 151 sets S_{attrA} to be empty (Step S103).

The extraction unit 151 updates S_{attrA} with "S_{attrA} ∪ xᵢ" (Step S104). The extraction unit 151 generates a query based on S_{attrA} (Step S105).

The extraction unit 151 inputs a query to the generation model M1 and generates a face image expressing S_{attrA} (Step S106). The extraction unit 151 detects a face from the face image (Step S107).

In a case where the face detection accuracy for the face image has deteriorated (Step S108, Yes), the extraction unit 151 adds xⱼ to S_{attrA} (Step S109), and proceeds to Step S105. However, it is assumed that a condition of j < i is satisfied. This processing corresponds to removal of xi added in S104.

On the other hand, in a case where the face detection accuracy for the face image is not deteriorated (Step S108, No), the extraction unit 151 updates i to i+1 (Step S110).

In a case where a condition of i ≤ n is satisfied (Step S111, Yes), the extraction unit 151 proceeds to Step S105. On the other hand, in a case where the condition of i ≤ n is not satisfied (Step S111, No), the extraction unit 151 ends the processing.

The extraction unit 151 executes the processing illustrated in FIG. 7 to generate an attribute word set S_{attrA} and a face image set expressing S_{attrA}. The attribute word set S_{attrA} is attributes included in the initial table data 141, and includes an attribute in which the face detection accuracy for the face image is not deteriorated. The extraction unit 151 outputs data of the face image set expressing S_{attrA} to the augmentation unit 152. The extraction unit 151 outputs data of the attribute word set S_{attrA} to the matching unit 153.

Note that the extraction unit 151 may set the attribute value of the attribute included in the attribute word set S_{attrA} in association with the attribute word set S_{attrA}, or may store a relationship between the attribute and the attribute value in the storage unit 140.

The description returns to FIG. 5. The augmentation unit 152 generates a plurality of captions (text) by inputting each face image included in the face image set expressing S_{attrA} to the generation model M2. The augmentation unit 152 analyzes the plurality of captions, thereby extracting attributes and registering all the extracted attributes in an attribute word set S_{attrB}. The augmentation unit 152 executes morphological analysis on the caption, thereby acquiring information of a word or a part of speech included in the caption and extracting an attribute.

The augmentation unit 152 may extract an attribute of a word by using dictionary information or the like defining a relationship between the word and the attribute. A series of a plurality of words may correspond to one attribute. Note that the augmentation unit 152 specifies an appearance rate of each attribute and generates the appearance rate table 143.

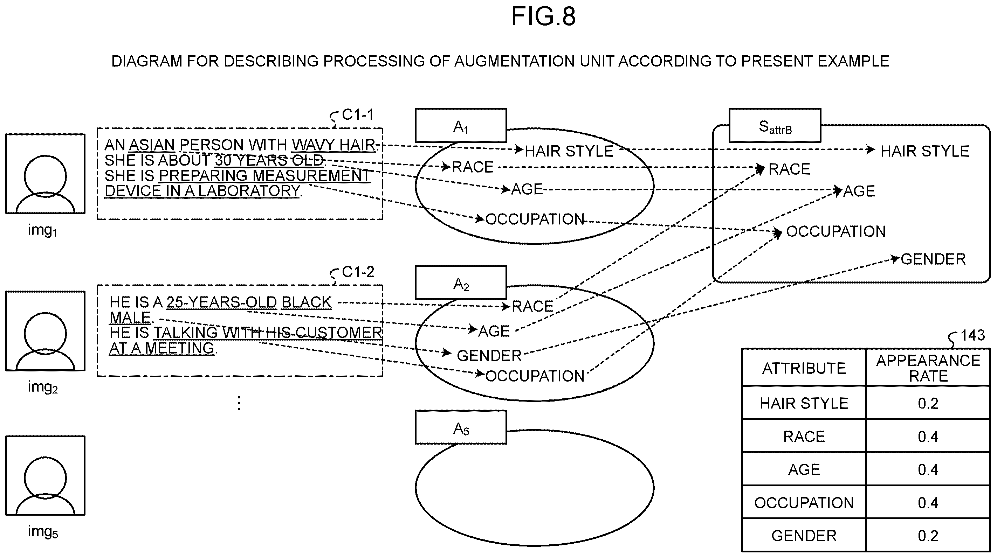

FIG. 8 is a diagram for describing processing of the augmentation unit according to the present example. In the example illustrated in FIG. 8, the augmentation unit 152 generates a caption c1-1 by inputting a face image img₁, to the generation model M2. The augmentation unit 152 executes morphological analysis on the caption c1-1, thereby extracting an attribute of a word and generating an attribute word set A₁.

The attribute word set A₁ includes the attribute "race" corresponding to "Asian", the attribute "hair style" corresponding to "wavy hair", the attribute "age" corresponding to "30 years old", and the attribute "occupation" corresponding to "preparing measurement device in a laboratory". The augmentation unit 152 registers all attributes included in the attribute word set A₁ in the attribute word set S_{attrB}.

Subsequently, the augmentation unit 152 generates a caption c1-2 by inputting a face image img₂ to the generation model M2. The augmentation unit 152 executes morphological analysis on the caption c1-2, thereby extracting an attribute of a word and generating an attribute word set A₂.

The attribute word set A₂ includes the attribute "age" corresponding to "25-years-old", the attribute "race" corresponding to "black", the attribute "gender" corresponding to "male", and the attribute "occupation" corresponding to "talking with his customer at a meeting". The augmentation unit 152 adds the attribute "gender" that is not registered in the attribute word set S_{attrB} among the attributes included in the attribute word set A₂, to the registration of the attribute word set S_{attrB}.

For example, the augmentation unit 152 adds an attribute to the attribute word set S_{attrB} by repeatedly executing the above processing also for face images img₃ to img₅. In addition, the augmentation unit 152 generates the appearance rate table 143 based on the attribute extraction result. For example, in the appearance rate table 143 of FIG. 8, the appearance rate of the attribute "hair style" is "1/5". This means that the attribute "hair style" has appeared from one of the five captions generated by inputting the face images img₁ to img₅ to the generation model M2 at the time of the completion of processing of img₁ to img₂.

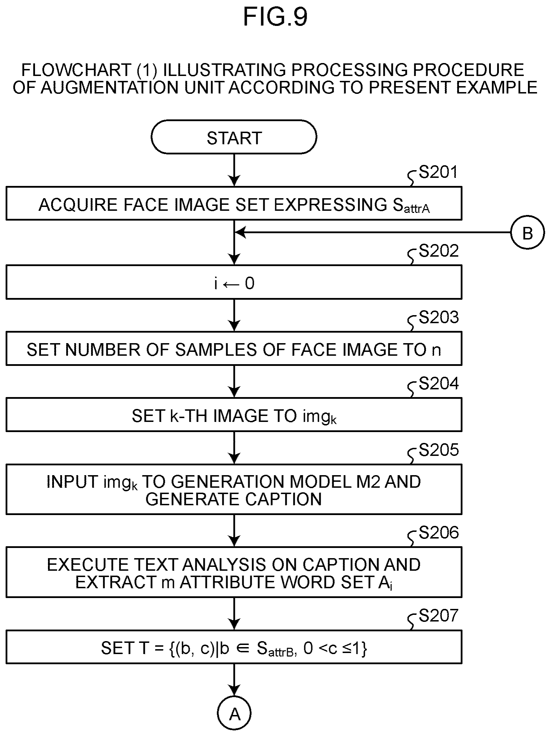

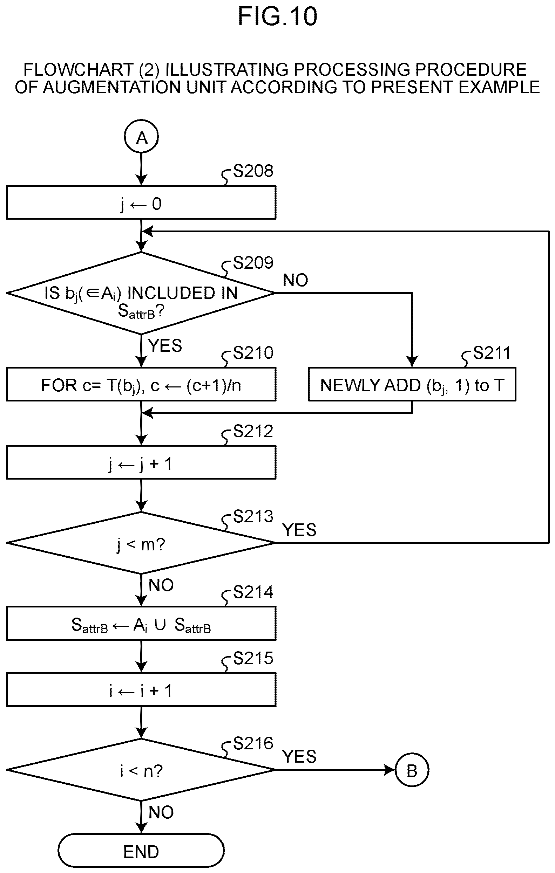

Here, an example of a processing procedure of the augmentation unit 152 will be described. FIGS. 9 and 10 are flowcharts illustrating a processing procedure of the augmentation unit according to the present example. Note that "T" illustrated in FIGS. 9 and 10 corresponds to the appearance rate table 143. b set to T indicates the attribute, and c indicates the appearance rate.

First, description will be made with reference to FIG. 9. The augmentation unit 152 of the information processing apparatus 100 acquires a face image set expressing S_{attrA} (Step S201). The augmentation unit 152 sets 0 to i (Step S202).

The augmentation unit 152 sets the number of samples of the face image to n (Step S203). The augmentation unit 152 sets the k-th image as imgₖ (Step S204). The augmentation unit 152 inputs imgₖ to the generation model M2 and generates a caption (Step S205).

The augmentation unit 152 executes text analysis on the caption and extracts m sets of attribute word sets Aᵢ (Step S206). The augmentation unit 152 prepares a data structure satisfying T = {(b, c) |b ∈ S_{attrB}, 0 <c ≤ 1} (Step S207), and proceeds to Step S208 in FIG. 10.

Description will be made with reference to FIG. 10. The augmentation unit 152 sets 0 to j (Step S208). In a case where bⱼ (∈Aᵢ) is included in S_{attrB} (Step S209, Yes), the augmentation unit 152 sets (c+1)/n to c for c = T(bⱼ) (here, it is assumed that c = T(bj) is a value of c corresponding to bj at T) (Step S210), and proceeds to Step S212.

On the other hand, in a case where bⱼ (∈Aᵢ) is not included in S_{attrB} (Step S209, No), the augmentation unit 152 newly adds (bⱼ, 1) to T (Step S211) and proceeds to Step S212.

The augmentation unit 152 adds 1 to j (Step S212). In a case where a condition of j < m is satisfied (Step S213, Yes), the augmentation unit 152 proceeds to Step S209. On the other hand, in a case where the condition of j < m is not satisfied (Step S213, No), the augmentation unit 152 updates S_{attrB} with "Aᵢ ∪ S_{attrB}" (Step S214).

The augmentation unit 152 adds 1 to i (Step S215). In a case where a condition of i < n is satisfied (Step S216, Yes), the augmentation unit 152 proceeds to Step S202 of FIG. 9. On the other hand, in a case where the condition of i < n is not satisfied (Step S216, No), the augmentation unit 152 ends the processing.

The augmentation unit 152 executes the processing illustrated in FIGS. 9 and 10 to generate the attribute word set S_{attrB} and the appearance rate table 143 (appearance rate table T). The augmentation unit 152 outputs data of the attribute word set S_{attrB} to the matching unit 153. Note that the augmentation unit 152 may set the attribute value of the attribute included in the attribute word set S_{attrB} in association with the attribute word set S_{attrB}, or may store the relationship between the attribute and the attribute value in the storage unit 140.

The description returns to FIG. 5. The matching unit 153 generates the augmentation table data 144 based on the attribute word set S_{attrA}, the attribute word set S_{attrB}, and the appearance rate table 143 (appearance rate table T). For example, the matching unit 153 generates a set S of the attribute word set S_{attrA} and the attribute word set S_{attrB}, and specifies an attribute included in the initial table data 141 or the actual operation data 142 among attributes included in the set **S.** The matching unit 153 sets a relationship between the specified attribute and the attribute value in the augmentation table data 144.

In addition, the matching unit 153 specifies an attribute having an appearance rate that is equal to or more than a threshold value among the attributes included in the set **S,** based on the appearance rate table 143. The matching unit sets the relationship between the specified attribute and the attribute value in the augmentation table data 144. For example, it is assumed that data of the attribute value corresponding to each attribute is stored in the storage unit 140.

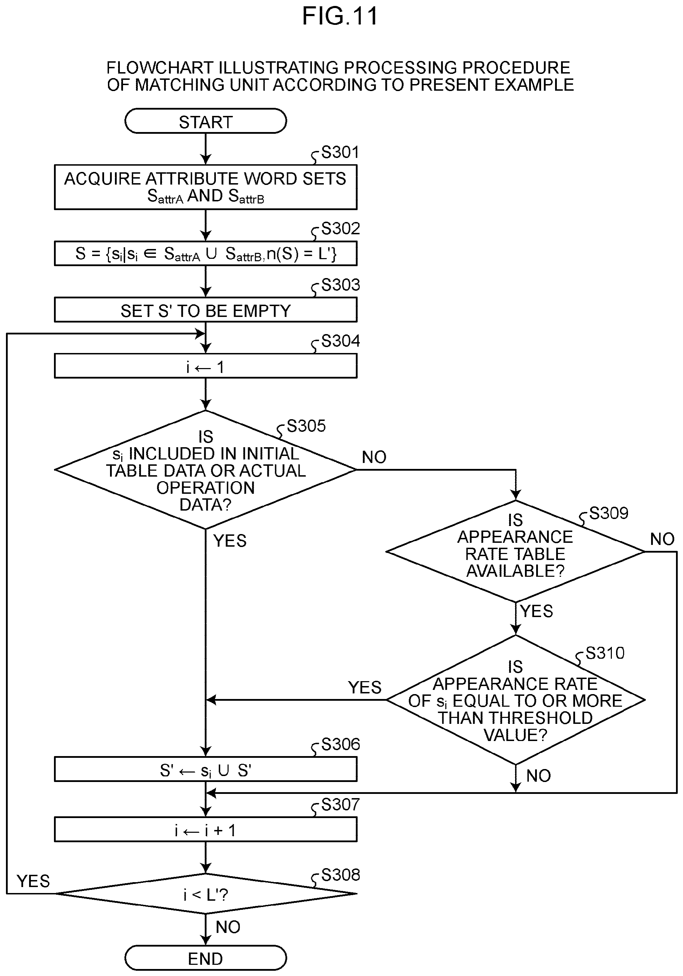

Here, an example of a processing procedure of the matching unit 153 will be described. FIG. 11 is a flowchart illustrating the processing procedure of the matching unit according to the present example. Note that "S'" illustrated in FIG. 11 corresponds to the augmentation table data 144.

As illustrated in FIG. 11, the matching unit 153 acquires the attribute word sets S_{attrA} and S_{attrB} (Step S301). The matching unit 153 sets sᵢ to S under a condition of "sᵢ ∈ S_{attrA} U S_{attrB}, n(s) = L'" (Step S302). Here, L' in Step S302 is the number of attributes included in S.

The matching unit 153 sets S' to be empty (Step S303). The matching unit 153 sets 1 to i (Step S304). In a case where sᵢ is included in the initial table data 141 or the actual operation data 142 (Step S305, Yes), the matching unit 153 proceeds to Step S306. The matching unit 153 updates S' with "sᵢ ∪ S'" (Step S306).

The matching unit 153 adds 1 to i (Step S307). In a case where a condition of i < L' is satisfied (Step S308, Yes), the matching unit 153 proceeds to Step S304. On the other hand, in a case where the condition of i < L' is not satisfied (Step S308, No), the matching unit 153 ends the processing.

Meanwhile, in a case where the condition of Step S305 is not satisfied (Step S305, No), the matching unit 153 proceeds to Step S309. In a case where the appearance rate table 143 is not available (Step S309, No), the matching unit 153 proceeds to Step S307.

On the other hand, in a case where the appearance rate table 143 is available (Step S309, Yes), the matching unit 153 proceeds to Step S310. In a case where the appearance rate of sᵢ is equal to or more than a threshold value (Step S310, Yes), the matching unit 153 proceeds to Step S306. In a case where the appearance rate of sᵢ is not equal to or more than the threshold value (Step S310, No), the matching unit 153 proceeds to Step S307.

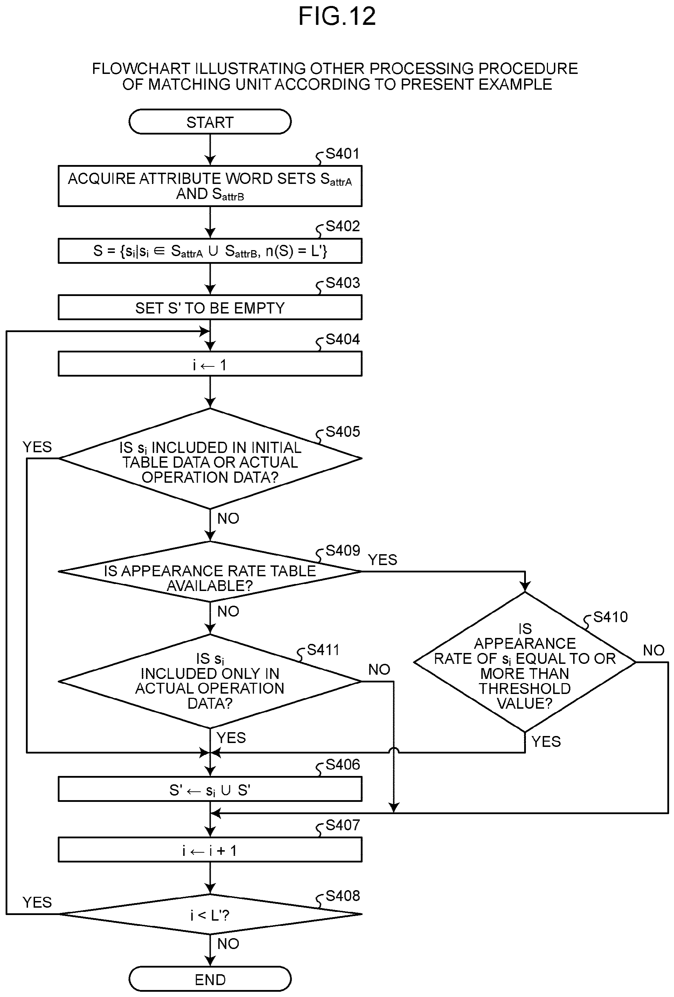

Note that the processing procedure of the matching unit 153 is not limited to the processing procedure described with reference to FIG. 11. For example, in addition to the above processing, the matching unit 153 sets the attribute that is included only in the actual operation data 142 among the attributes included in the set S, in the augmentation table data 144. The matching unit 153 may execute a processing procedure illustrated in FIG. 12. FIG. 12 is a flowchart illustrating other processing procedure of the matching unit according to the present example.

As illustrated in FIG. 12, the matching unit 153 acquires the attribute word sets S_{attrA} and S_{attrB} (Step S401). The matching unit 153 sets sᵢ to S under a condition of "sᵢ ∈ S_{attrA} ∪ S_{attrB}, n(s) = L'" (Step S402). L' in Step S402 is the number of attributes included in S. The matching unit 153 sets S' to be empty (Step S403).

The matching unit 153 sets 1 to i (Step S404). In a case where sᵢ is included in the initial table data 141 or the actual operation data 142 (Step S405, Yes), the matching unit 153 proceeds to Step S406. The matching unit 153 updates S' with "sᵢ ∪ S'" (Step S406).

The matching unit 153 adds 1 to i(Step S407). In a case where a condition of i < L' is satisfied (Step S408, Yes), the matching unit 153 proceeds to Step S404. On the other hand, in a case where the condition of i < L' is not satisfied (Step S408, No), the matching unit 153 ends the processing.

Meanwhile, in a case where the condition of Step S405 is not satisfied (Step S405, No), the matching unit 153 proceeds to Step S409. In a case where the appearance rate table 143 is available (Step S409, Yes), the matching unit 153 proceeds to Step S410. In a case where the appearance rate of sᵢ is equal to or more than the threshold value (Step S410, Yes), the matching unit 153 proceeds to Step S406. In a case where the appearance rate of sᵢ is not equal to or more than the threshold value (Step S410, No), the matching unit 153 proceeds to Step S407.

Meanwhile, in a case where the condition of Step S409 is not satisfied (Step S409, No), the matching unit 153 proceeds to Step S411. In a case where sᵢ is included only in the actual operation data 142 (Step S411, Yes), the matching unit 153 proceeds to Step S406. On the other hand, in a case where sᵢ is not included only in the actual operation data 142 (Step S411, No), the matching unit 153 proceeds to Step S407.

The description returns to FIG. 5. The training unit 154 trains the estimation model by using information stored in the augmentation table data 144. For example, the training unit 154 trains the estimation model M3 based on an error back propagation method, by using an attribute value of an attribute other than the protected attribute among the attributes included in the augmentation table data 144 as input data and using the attribute value of the protected attribute as a correct answer label.

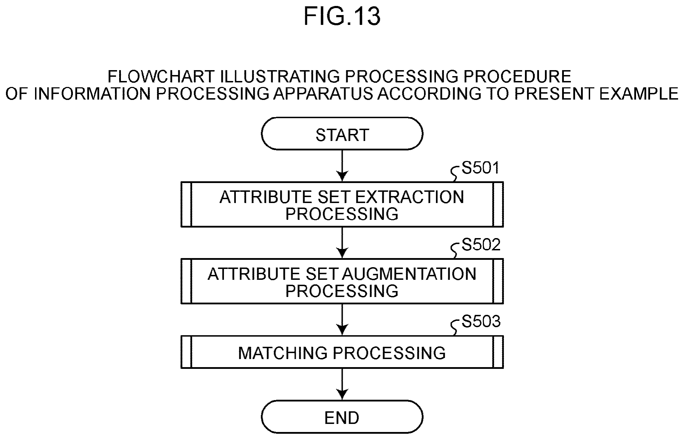

Next, an example of a processing procedure of the information processing apparatus 100 according to the present example will be described. FIG. 13 is a flowchart illustrating the processing procedure of the information processing apparatus according to the present example. As illustrated in FIG. 13, the extraction unit 151 of the information processing apparatus 100 executes attribute set extraction processing (Step S501). The attribute set extraction processing in Step S501 corresponds to the processing executed by the extraction unit 151 described with reference to FIG. 7.

The augmentation unit 152 of the information processing apparatus 100 executes attribute set augmentation processing (Step S502). The attribute set augmentation processing in Step S502 corresponds to the processing executed by the augmentation unit 152 described with reference to FIGS. 9 and 10.

The matching unit 153 of the information processing apparatus 100 executes matching processing (Step S503). The matching processing in Step S503 corresponds to the processing of the matching unit 153 described with reference to FIG. 11 or 12.

Next, effects of the information processing apparatus 100 according to the present example will be described. The information processing apparatus 100 generates an image by inputting a query including attribute values of a plurality of attributes included in the initial table data 141 to the generation model M1, and generates a caption by inputting the generated image to the generation model M2. The information processing apparatus 100 can perform data augmentation by selecting an attribute value of another attribute different from the attribute included in the initial table data 141 from the caption and adding the attribute value of the selected attribute to the initial table data 141.

The information processing apparatus 100 generates a plurality of images by repeatedly executing processing of inputting a plurality of queries to the generation model M1, and generates a plurality of captions by repeatedly executing processing of inputting a plurality of images to the generation model M2. The information processing apparatus 100 selects an attribute value of another attribute different from the attribute included in the initial table data 141 based on the appearance rate of the attribute detected from a plurality of captions, and adds the attribute value of the selected attribute to the initial table data 141. As a result, it is possible to perform data augmentation with an attribute value of a more optimal attribute.

The information processing apparatus 100 can perform data augmentation by selecting an attribute value of another attribute different from the attribute included in the initial table data 141 and the actual operation data 142 from the caption and adding the attribute value of the selected attribute to the initial table data 141.

In addition, the information processing apparatus 100 trains the estimation model M3 based on the error back propagation method, by using an attribute value of an attribute other than the protected attribute among the attributes included in the augmentation table data 144 as input data and using the attribute value of the protected attribute as a correct answer label. As a result, it is possible to generate the estimation model M3 that can accurately estimate the protected attribute. For example, since the types of the attributes of the augmentation table data 144 increase as compared with the initial table data 141 and the actual operation data 142, it is possible to suppress over-training for a specific attribute in a case where the estimation model M3 is trained. Furthermore, by using the available known data, it is possible to remedy fairness without needing the protected attribute for unknown input data.

In addition, the information processing apparatus 100 can execute other processing by using the estimated protected attribute. For example, the information processing apparatus 100 may train an estimation model for estimating an attribute other than the protected attribute by using attribute values of a plurality of attributes including the estimated protected attribute as inputs, and use the estimation model.

Meanwhile, the processing of the information processing apparatus 100 described above is an example, and the information processing apparatus 100 may execute other processing. Hereinafter, other processing of the augmentation unit 152 and other processing of the matching unit 153 will be sequentially described.

For example, as described with reference to FIG. 8, the augmentation unit 152 registers all the attributes specified from each caption in the attribute word set S_{attrB}, but the present example is not limited thereto. The augmentation unit 152 may register the attribute that has been specified from each caption and is common to each caption in the attribute word set S_{attrB}.

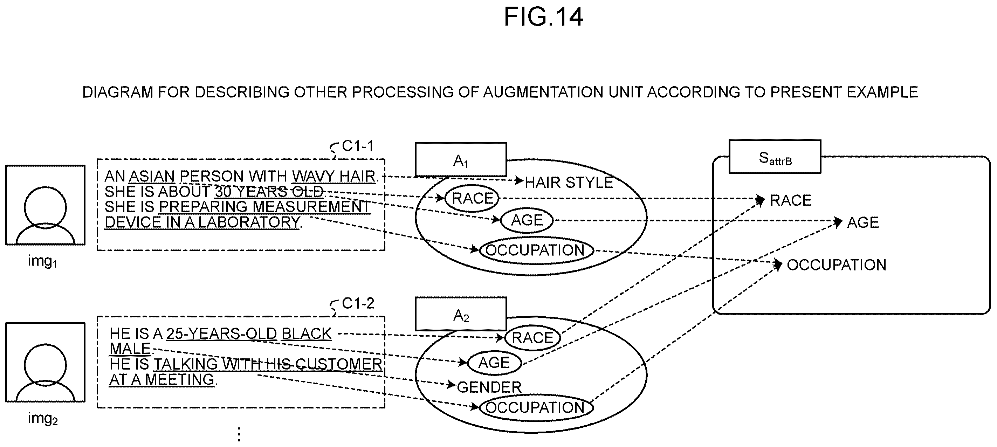

FIG. 14 is a diagram for describing other processing of the augmentation unit according to the present example. As illustrated in FIG. 14, a caption c1-1 is generated by inputting a face image img₁, to the generation model M2. The augmentation unit 152 executes morphological analysis on the caption c1-1, thereby extracting an attribute of a word and generating an attribute word set A₁.

The attribute word set A₁ includes the attribute "race" corresponding to "Asian", the attribute "hair style" corresponding to "wavy hair", the attribute "age" corresponding to "30 years old", and the attribute "occupation" corresponding to "preparing measurement device in a laboratory".

Subsequently, the augmentation unit 152 generates a caption c1-2 by inputting a face image img₂ to the generation model M2. The augmentation unit 152 executes morphological analysis on the caption c1-2, thereby extracting an attribute of a word and generating an attribute word set A₂.

The attribute word set A₂ includes the attribute "age" corresponding to "25-year-old", the attribute "race" corresponding to "black", the attribute "gender" corresponding to "male", and the attribute "occupation" corresponding to "talking with his customer at a meeting".

The augmentation unit 152 registers the attributes "race", "age", and "occupation" which are common to the attribute word set A₁ and the attribute word set A₂ in the attribute word set S_{attrB}. In the example illustrated in FIG. 14, the description has been made by using the face image img₁, and the face image img₂. However, in a case where there is another face image, the augmentation unit 152 registers an attribute common to each attribute set obtained from the caption of each face image in the attribute word set S_{attrB}.

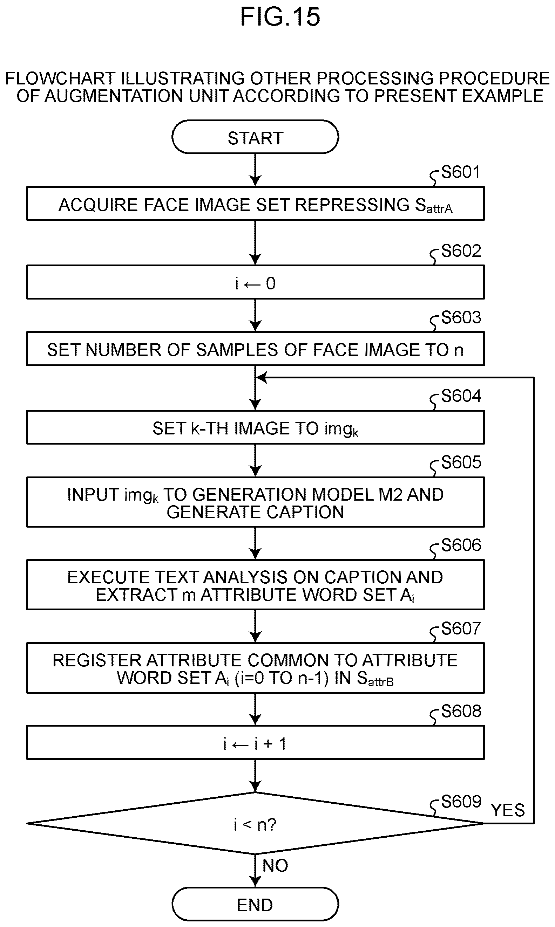

FIG. 15 is a flowchart illustrating other processing procedure of the augmentation unit according to the present example. As illustrated in FIG. 15, the augmentation unit 152 of the information processing apparatus 100 acquires a face image set representing S_{attrA} (Step S601). The augmentation unit 152 sets 0 to i (Step S602).

The augmentation unit 152 sets the number of samples of the face image to n (Step S603). The augmentation unit 152 sets the k-th image as imgₖ (Step S604). The augmentation unit 152 inputs imgₖ to the generation model M2 and generates a caption (Step S605).

The augmentation unit 152 executes text analysis on the caption and extracts m sets of attribute word sets Aᵢ (Step S606). The augmentation unit 152 registers an attribute common to the attribute word set Aᵢ (i = 0 to n-1) in S_{attrB} (Step S607).

The augmentation unit 152 adds 1 to i (Step S608). In a case where a condition of i < n is satisfied (Step S609, Yes), the augmentation unit 152 proceeds to Step S604. On the other hand, in a case where the condition of i < n is not satisfied (Step S609, No), the augmentation unit 152 ends the processing.

By executing the above processing, the augmentation unit 152 can register the attribute that appears from the caption of each face image in the attribute word set S_{attrB}.

Subsequently, other processing of the matching unit 153 will be described. For example, the matching unit 153 specifies the attribute as an addition target based on the attribute word set S_{attrA} generated based on the initial table data 141 and the attribute word set S_{attrB} generated by the augmentation unit 152, but is not limited thereto.

For example, the matching unit 153 may execute processing of excluding the attribute value of the attribute having a contradiction relationship with the attribute value of the attribute of the attribute word set S_{attrA} among the attribute values of the attribute as the addition target. For example, a target (a name or a range of a numerical value) of an attribute value for an attribute is set in a table or the like in advance, and the matching unit 153 specifies and excludes attribute values of attributes that are in contradiction with each other, based on the table. As a result, it is possible to suppress registration of the attribute value in contradiction with the attribute, in the augmentation table data 144.

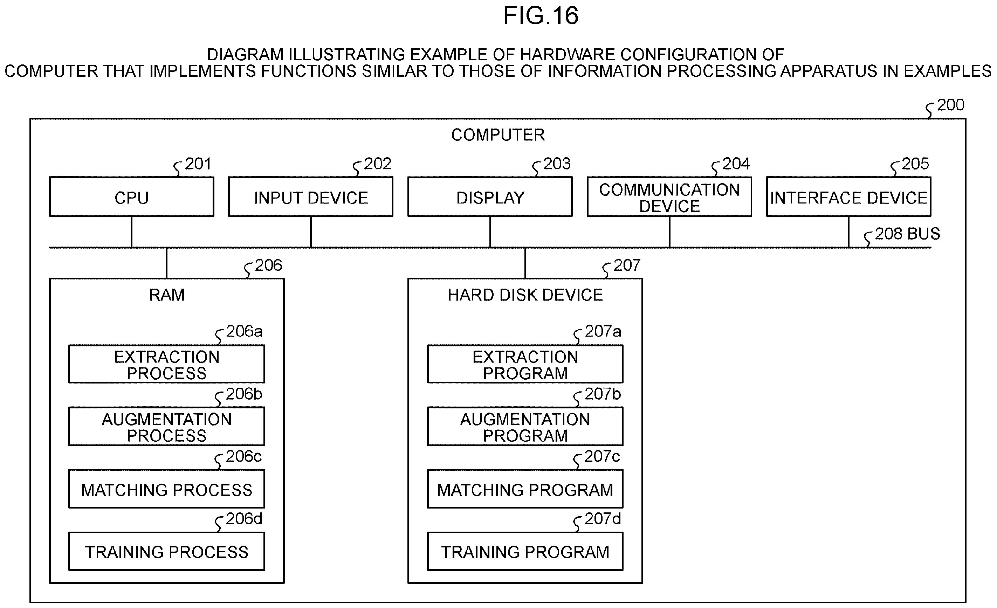

Next, an example of a hardware configuration of a computer that implements functions similar to those of the information processing apparatus 100 described above will be described. FIG. 16 is a diagram illustrating the example of the hardware configuration of the computer that implements the functions similar to those of the information processing apparatus in the examples.

As illustrated in FIG. 16, a computer 200 includes a CPU 201 that executes various types of arithmetic processing, an input device 202 that receives an input of data from a user, and a display 203. In addition, the computer 200 includes a communication device 204 that transmits and receives data to and from an external device or the like via a wired or wireless network, and an interface device 205. In addition, the computer 200 includes a RAM 206 that temporarily stores various types of information and a hard disk device 207. Then, each of the devices 201 to 207 is connected to a bus 208.

The hard disk device 207 includes an extraction program 207a, an augmentation program 207b, a matching program 207c, and a training program 207d. In addition, the CPU 201 reads the programs 207a to 207d and loads the programs into the RAM 206.

The extraction program 207a functions as an extraction process 206a. The augmentation program 207b functions as an augmentation process 206b. The matching program 207c functions as a matching process 206c. The training program 207d functions as a training process 206d.

The processing of the extraction process 206a corresponds to the processing of the extraction unit 151. The processing of the augmentation process 206b corresponds to the processing of the augmentation unit 152. The processing of the matching process 206c corresponds to the processing of the matching unit 153. The processing of the training process 206d corresponds to the processing of the training unit 154.

The programs 207a to 207d do not necessarily need to be stored in the hard disk device 207 from the beginning. For example, each program is stored in a "portable physical medium" such as a flexible disk (FD), a CD-ROM, a DVD, a magneto-optical disk, or an IC card, which is inserted into the computer 200. Then, the computer 200 may read and execute the programs 207a to 207d.

Regarding an embodiment including the above examples, the following supplementary notes are further disclosed.

### Reference Signs List

- 100: INFORMATION PROCESSING APPARATUS
- 110: COMMUNICATION UNIT
- 120: INPUT UNIT
- 130: DISPLAY UNIT
- 140: STORAGE UNIT
- 141: INITIAL TABLE DATA
- 142: ACTUAL OPERATION DATA
- 143: APPEARANCE RATE TABLE
- 144: AUGMENTATION TABLE DATA
- 150: CONTROL UNIT
- 151: EXTRACTION UNIT
- 152: AUGMENTATION UNIT
- 153: MATCHING UNIT
- 154: TRAINING UNIT

## Claims

1. A data augmentation program that causes a computer to execute a process comprising:
acquiring an image by inputting, into a first generation model, first text including attribute values of a plurality of attributes included in first data among a plurality of pieces of data;
acquiring second text by inputting the image into a second generation model;
selecting an attribute value of other attribute different from the plurality of attributes from the second text; and
augmenting the plurality of pieces of data by adding the attribute value of the other attribute to the first data.

2. The data augmentation program according to claim 1, wherein the acquiring of the second text includes acquiring a plurality of pieces of the second text by inputting a plurality of images to the second generation model, and the selecting includes selecting the attribute value of the other attribute based on appearance rates of attributes included in the plurality of pieces of second text.

3. The data augmentation program according to claim 1, wherein the selecting includes acquiring second data including at least one or more different attributes as compared with the plurality of attributes included in the first data, and further selecting an attribute value of other attribute different from the attributes of the second data among attributes included in the second text.

4. The data augmentation program according to claim 1, wherein the process further including training an estimation model for estimating an attribute value of a protected attribute by setting an attribute value of an attribute corresponding to the protected attribute among a plurality of attributes augmented by the augmenting as a correct answer label and setting an attribute value of an attribute other than the protected attribute as input data.

5. The data augmentation program according to claim 1, wherein the augmenting skips the adding of the attribute value of the other attribute to the first data in a case where the attribute values of the plurality of attributes included in the first text are in contradiction with attribute values of a plurality of attributes included in the second text.

6. A data augmentation method, wherein a computer executes processing of:
acquiring an image by inputting, into a first generation model, first text including attribute values of a plurality of attributes included in first data among a plurality of pieces of data;
acquiring second text by inputting the image into a second generation model;
selecting an attribute value of other attribute different from the plurality of attributes from the second text; and
augmenting the plurality of pieces of data by adding the attribute value of the other attribute to the first data.

7. The data augmentation method according to claim 6, wherein the acquiring of the second text includes acquiring a plurality of pieces of the second text by inputting a plurality of images to the second generation model, and the selecting includes selecting the attribute value of the other attribute based on appearance rates of attributes included in the plurality of pieces of second text.

8. The data augmentation method according to claim 6, wherein the selecting includes acquiring second data including at least one or more different attributes as compared with the plurality of attributes included in the first data, and further selecting an attribute value of other attribute different from the attributes of the second data among attributes included in the second text.

9. The data augmentation method according to claim 6, further including training an estimation model for estimating an attribute value of a protected attribute by setting an attribute value of an attribute corresponding to the protected attribute among a plurality of attributes augmented by the augmenting as a correct answer label and setting an attribute value of an attribute other than the protected attribute as input data.

10. The data augmentation method according to claim 6, wherein the augmenting skips the adding of the attribute value of the other attribute to the first data in a case where the attribute values of the plurality of attributes included in the first text are in contradiction with attribute values of a plurality of attributes included in the second text.

11. An information processing apparatus including a control unit configured to execute a process comprising:
acquiring an image by inputting, into a first generation model, first text including attribute values of a plurality of attributes included in first data among a plurality of pieces of data;
acquiring second text by inputting the image into a second generation model;
selecting an attribute value of other attribute different from the plurality of attributes from the second text; and
augmenting the plurality of pieces of data by adding the attribute value of the other attribute to the first data.

12. The information processing apparatus according to claim 11, wherein the acquiring of the second text includes acquiring a plurality of pieces of the second text by inputting a plurality of images to the second generation model, and the selecting includes selecting the attribute value of the other attribute based on appearance rates of attributes included in the plurality of pieces of second text.

13. The information processing apparatus according to claim 11, wherein the selecting includes acquiring second data including at least one or more different attributes as compared with the plurality of attributes included in the first data, and further selecting an attribute value of other attribute different from the attributes of the second data among attributes included in the second text.

14. The information processing apparatus according to claim 11, wherein the control unit is further configured to execute training an estimation model for estimating an attribute value of a protected attribute by setting an attribute value of an attribute corresponding to the protected attribute among a plurality of attributes augmented by the augmenting as a correct answer label and setting an attribute value of an attribute other than the protected attribute as input data.

15. The information processing apparatus according to claim 11, wherein the augmenting skips the adding of the attribute value of the other attribute to the first data in a case where the attribute values of the plurality of attributes included in the first text are in contradiction with attribute values of a plurality of attributes included in the second text.
